# EUROPEAN PATENT SPECIFICATION

(11) **EP 3 168 141 B1**
(45) Date of publication and mention of the grant of the patent: **24.04.2019**
(21) Application number: 15306803.6
(22) Date of filing: 13.11.2015
(51) Int. Cl.: B64C 1/20

(54) **A CARGO FLOOR OR WALL FOR AN AIRCRAFT**
FRACHTWAND BZW. FRACHTDECK FÜR EIN FLUGZEUG
PAROI OU SOL DE CHARGEMENT POUR UN AVION

(43) Date of publication of application: 17.05.2017
(73) Proprietor: AIRBUS OPERATIONS (S.A.S), 31060 Toulouse (FR); Airbus (S.A.S.), 31700 Blagnac (FR); Airbus Operations GmbH, 21129 Hamburg (DE)
(72) Inventor: KIM, Hyung Jo, 31770 COLOMIERS (FR); CHRISTENSEN, Kai, 26219 BÖSEL (DE); CUILLER, Claude, 31620 CASTELNAU D'ESTRETEFONDS (FR); DEREUX, Pierre-Eric, 31770 COLOMIERS (FR); FEEST, Frank, 31400 TOULOUSE (FR); LAMPE, Dietrich, 01279 DRESDEN (DE); NIEMECK, Knut, 22549 HAMBURG (DE); WAIDELICH, Kathryn, 31700 BEAUZELLE (FR)
(74) Representative: Gicquel, Olivier Yves Gérard

(56) References cited:
- WO-A1-2005/012085
- WO-A1-2011/009474
- DE-U1- 29 724 813
- JP-A- 2005 206 139

## Description

### FIELD OF THE INVENTION

The present invention relates to the walls of a cargo area of an aircraft. The present invention also relates to an aircraft having a cargo area.

### BACKGROUND OF THE INVENTION

In an aircraft it is typically necessary to run pipes and hoses for the passage of fluids, along a fuselage. Such pipes and hoses are received in cavities formed behind walls or under a floor. For example, aircraft typically have a cargo area in the fuselage of the aircraft on which cargo and other items are supported. This cargo area is delimited by cargo walls, and in particular by a cargo floor. Such a cargo floor defines a cargo area above the cargo floor and a bilge space below the cargo floor. Pipes and hoses may be received in the bilge space.

However, the available space for receiving pipes and hoses behind, below and/or above the cargo area is limited, and often occupied by other elements of the aircraft such as structure rods, beams, equipment, harnesses, etc. The integration of the pipes and hoses along with other elements is a difficult task for the aircraft manufacturer, and it makes also maintenance task difficult to the aircraft operators. The integration of the pipes and hoses results often in their non-optimized shapes forcing them to take longer paths or creating curves on them. Furthermore, pipes and hoses need to be fixedly mounted to prevent movement of the pipes and hoses. The fixation is achieved by mounting pipes and hoses to the fuselage and/or cargo structure/sub-structure by different fixation means such as brackets. Crowded areas and non-optimized shapes of pipes and horses often result in increase of number of different types of fixation means increasing the complexity of integration and the cost for the production of those fixation means. The patent application WO2011/009474, that concerns a cargo floor for an aircraft, as well as and the patent application JP2005206139 that relates to a floor for a vehicle, both describe solution to optimize space allocation by using the floor itself as one or more fluid ducts. Therefore, the number of discrete pipes and hoses required to be received in an aircraft is reduced. Such an arrangement minimises the number of components, such as brackets, required.

### SUMMARY OF THE INVENTION

The invention concerns an alternative design of a cargo floor that is defined by claim 1.

### BRIEF DESCRIPTION OF THE DRAWINGS

Embodiments of the invention will now be described with reference to the accompanying drawings, in which:
FIG 1 is a schematic cross-sectional view of an aircraft;
FIG. 2 is a schematic cross-sectional view of a cargo floor for an aircraft, for informative purpose.;
FIG. 3 is a schematic cross-sectional view of another cargo floor for an aircraft according to the invention; and
FIG. 4 is a schematic plan view of the cargo floor for an aircraft shown in FIG. 2.

### DETAILED DESCRIPTION OF EMBODIMENT(S)

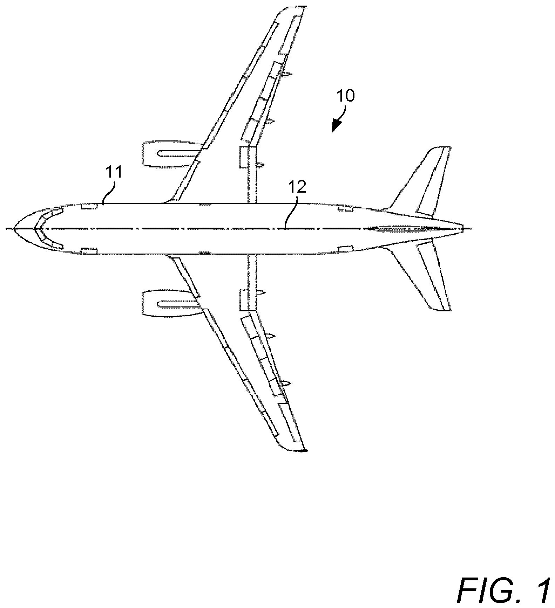

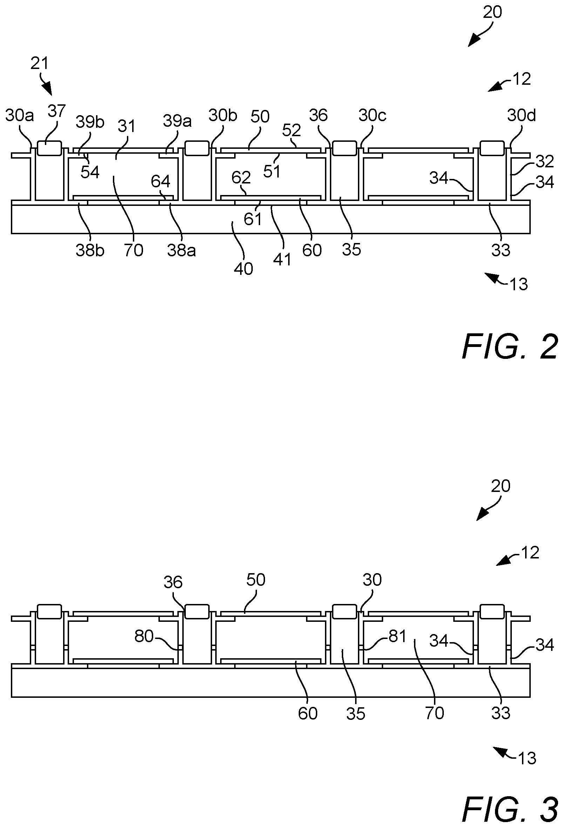

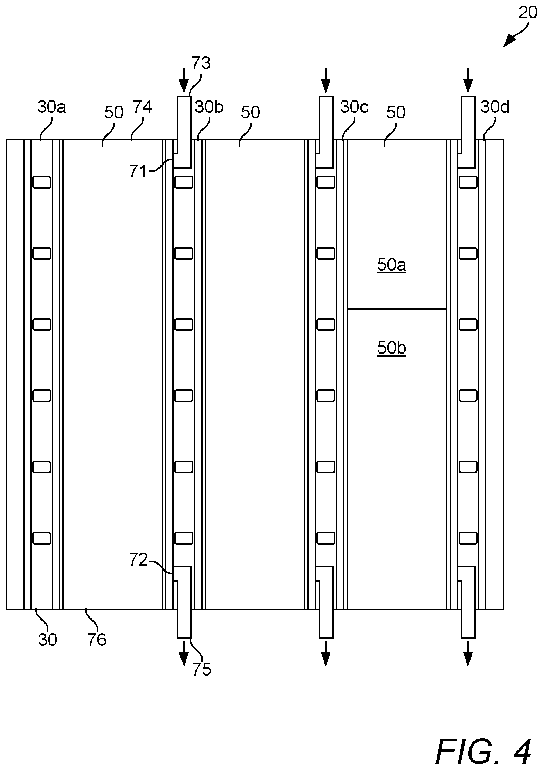

An aircraft 10 is shown in FIG. 1. The aircraft 10 has a fuselage 11. The fuselage 11 is generally cylindrical and defines a longitudinal axis 12. A cargo area is comprised inside the fuselage 11, and is delimited by cargo walls. These cargo walls comprise lateral cargo walls, generally vertical, cargo ceiling and cargo floor, generally horizontal. Referring to FIGS. 2 and 4, part of a cargo floor 20 of this cargo area is shown. The cargo floor 20 may be assembled with the aircraft 10 or may be retrofitted into the aircraft 10. The cargo area 12 is defined above the cargo floor 20, and a bilge space 13 is defined below the cargo floor 20. The cargo floor 20 divides the cargo area 12 from the bilge space 13.

The cargo floor 20 comprises a floor substructure 21. The floor substructure 21 comprises an array of beams, or rails 30. Four rails 30 are shown in FIGS. 2 and 4, and are identified as rails 30a, 30b, 30c, 30d. It will be understood that the number of rails 30 may differ. For example, in one embodiment the cargo floor 20 has two rails 30 only.

The floor substructure 21 comprises an array of bilge crossbeams 40. The bilge crossbeams 40 extend across the fuselage 11. That is, the bilge crossbeams 40 extend in a transverse direction to the longitudinal axis of the fuselage 11. In the present embodiment, the bilge crossbeams 40 extend perpendicular to the longitudinal axis of the fuselage 11. The bilge crossbeams 40 are elongate and are supported at points along their length. Each bilge crossbeam 40 has a top face 41. The number of bilge crossbeams 40 may vary. One bilge crossbeam 40 is shown in FIG. 2.

The rails 30 extend parallel to, but spaced from, each other. The spacing between the rails 30 may vary. Each pair of rails 30 is separated by a longitudinally extending space 31.

Each rail 30 extends parallel to the longitudinal axis of the fuselage 11. The rails 30 extend perpendicular to the bilge crossbeams 40.

In the present embodiment, each rail 30 is a roller-track. However, the arrangement of each rail 30 may vary, and may not be a roller-Crack. The arrangement of one rail 30 may differ from that of the or each adjacent rail 30.

Each rail 30 is elongate. Although each rail 30 is shown as one elongate member in the present arrangement, it will be understood that each rail 30 may be formed of two or more rail elements which are longitudinally aligned with each other. Such rail elements are fluidly sealable with each other at abutting ends.

One of the rails 30 will now be described in detail. Each of the rails generally has the same arrangement. The rail 30 is an elongate member. The rail 30 may be formed from an extruded metal, for example. The rail 30 has an upstanding body 32. A base 33 extends along the body 32. The base 33 is at the lower end of the rail 30. The body 32 is generally U-shaped, with the base 33 and two upstanding walls 34 defining the body 32. The walls 34 upstand from the base 33. The body 32 defines a channel 35. The channel 35 is elongate. The channel 35 has a mouth 36. The mouth 36 extends along the length of the rail 30. The mouth 36 is open at the upper end of the rail 30.

Rollers 37 are received in the mouth 36. One such roller 37 is shown in FIG. 2. The rollers 37 protrude from the mouth 36. The rollers 37 are rotatably mounted to the body 32 by a shaft (not shown). The rollers 37 are free to rotate. The rollers 37 are spaced along the longitudinal length of the rail 30. It will be understood that in some rails 30, the rollers 37 may be omitted.

The rail 30 is fixedly mounted to the or each crossbeam 40 by a fixing (not shown). Such fixings are known. The fixing extends through the base 33 to the crossbeam 40. With such a fixing arrangement the rail 30 is fixedly mounted in the fuselage 11.

The rail 30 has a lower flange. The lower flange is a first lower flange 38a extending from the lower end of the body 32. The first lower flange 38a extends from the lower end of the body 32 at or proximate to the base 33. The first lower flange 38a extends from one side of the body 32. In FIG. 2, the first lower flange 38a is shown extending from the left hand side of the body 32. The first lower flange 38a extends along the length of the rail 30.

The first lower flange 38a acts as a support.

The rail 30 has a second lower flange 38b extending from the lower end of the body 32. The second lower flange 38b extends from the lower end of the body 32 at or proximate to the base 33. The second lower flange 38b extends from one side of the body 32. In FIG. 2, second lower flange 38b is shown extending from the right hand side of the body 32. The second lower flange 38b extends along the length of the rail 30.

The second lower flange 38b acts as a support. The first and second lower flanges 38a, 38b may form part of the base 33.

The rail 30 has an upper flange. The upper flange is a first upper flange 39a extending from the upper end of the body 32. The first upper flange 39a extends from the upper end of the body 32 at or proximate to the mouth 36. The first upper flange 39a extends from one side of the body 32. In FIG. 2, the first upper flange 39a is shown extending from the left hand side of the body 32. The first upper flange 39a extends along the length of the rail 30.

The first upper flange 39a acts as a support.

The rail 30 has a second upper flange 39b extending from the upper end of the body 32. The second upper flange 39b extends from the upper end of the body 32 at or proximate to the mouth 36. The second upper flange 39b extends from one side of the body 32. In FIG. 2, the second upper flange 39b is shown extending from the right hand side of the body 32. The second upper flange 39b extends along the length of the rail 30.

The second upper flange 39b acts as a support.

The first upper flange 39a is spaced from the first lower flange 38a. The first lower and upper flanges 38a, 39a are spaced apart by the wall 34. The second upper flange 39b is spaced from the second lower flange 38b. The second lower and upper flanges 38b, 39b are spaced apart by the other wall 34 of the body 32.

The cargo floor 20 further comprises a first, upper, panel 50. The cargo floor 20 further comprises a second, lower panel 60. The first, upper, panel 50 and second, lower panel 60 are sealably mountable between two adjacent rails 30. The first, upper, panel 50 and second, lower panel 60 are spaced from each other to define a fluid duct 70. When assembled, the pair of adjacent rails 30, first, upper, panel 50 and second, lower panel 60 together form a fluid duct 70. The fluid duct 70 is elongate and extends longitudinally in the direction of the longitudinal axis of each rail 30.

Three first, upper, panels 50 are shown in FIG. 4. One of the first, upper, panels 50 will now be described.

The first, upper, panel 50 is mountable to the rails 30. The first, upper, panel 50 is elongate. The first, upper, panel 50 may comprise a plurality of panel sections. An example of two panel sections 50a, 50b is shown in FIG. 4. Such panel sections 50a, 50b are fluidly sealable to each other along abutting ends.

The first, upper, panel 50 is configured to be mounted between adjacent rails 30. That is, the first, upper, panel 50 extends between adjacent rails 30. The first, upper, panel 50 is configured to extend between one of the upper flanges 39a of one rail 30 and one of the upper flanges 39b of the adjacent rail 30. The first, upper, panel 50 is supported by the upper flanges 39a, 39b of adjacent rails 30.

The first, upper, panel 50 is mounted to the adjacent rails 30 by fixings (not shown). Such fixings for assembling a cargo floor are known and so a detailed description will be omitted.

During assembly, the first, upper, panel 50 is disposed on the upper flanges 39a, 39b of adjacent rails 30. The first, upper, panel 50 is fluidly sealed with each of the adjacent rails 30. A sealing arrangement 54 is provided between the first, upper, panel 50 and the rail 30. In the present embodiment, the first, upper, panel 50 is fluidly sealed with the upper flanges 39a, 39b of adjacent rails 30.

In one embodiment, the first, upper, panel 50 is fluidly sealed with the body 32 of each adjacent rail 30. In such an arrangement, the upper flanges 39a, 39b may have breaks along their length as the upper flanges 39a, 39b act as a support for the first, upper, panel 50 only.

A lower face 51 of the first, upper, panel 50 faces and abuts the upper flanges 39a, 39b of adjacent rails 30. The sealing arrangement 54 is provided between the lower face 51 of the first, upper, panel 50 and the upper flanges 39a, 39b. The lower face 51, in the present embodiment the section of the lower face 51 extending between the upper flanges 39a, 39b, forms an inner surface of the fluid duct 70.

An upper face 52 of the first, upper, panel 50 is exposed and defines a floor surface. Such a floor surface acts as a surface on which to walk and on which cargo items may be placed. The upper end of the rails 30 may be configured to lie planar with the upper face 52 of the first, upper, panel 50.

The second, lower, panel 60 is spaced from the first, upper, panel 50. One of the second, lower, panels 60 will now be described.

The second, lower, panel 60 is mountable to the rails 30. The second, lower, panel 60 is elongate. The second, lower, panel 60 may comprise a plurality of panel sections. Such panel sections are fluidly sealable to each other along abutting ends.

The second, lower, panel 60 is configured to be mounted between adjacent rails 30. That is, the second, lower, panel 60 extends between adjacent rails 30. The second, lower, panel 60 is configured to extend between one of the lower flanges 38a of one rail 30 and one of the lower flanges 38b of the adjacent rail 30. The second, lower, panel 60 is supported by the lower flanges 38a, 38b of adjacent rails 30.

The second, lower, panel 60 is mounted to the adjacent rails 30 by fixings (not shown). Such fixings for assembling a cargo floor are known and so a detailed description will be omitted.

During assembly, the second, lower, panel 60 is disposed on the lower flanges 38a, 38b of adjacent rails 30. The second, lower, panel 60 is fluidly sealed with each of the adjacent rails 30. A sealing arrangement 64 is provided between the second, lower, panel 60 and the rail 30. In the present embodiment, the second, lower, panel 60 is fluidly sealed with the lower flanges 38a, 38b of adjacent rails 30.

In one embodiment, the second, lower, panel 60 is fluidly sealed with the body 32 of each adjacent rail 30. In such an arrangement, the lower flanges 38a, 38b may have breaks along their length as the lower flanges 38a, 38b act as a support for the second, lower, panel 60 only.

A lower face 61 of the second, lower, panel 60 faces and abuts the lower flanges 38a, 38b of adjacent rails 30. The sealing arrangement 64 is provided between the lower face 61 of the second, lower, panel 60 and the lower flanges 38a, 38b.

The second, lower, panels 60 together with the base 33 of each rail 30 together form a sealing surface. This sealing surface acts to seal the cargo area 12 from the bilge space 13.

An upper face 52 of the second, lower, panel 60 forms an inner surface of the fluid duct 70.

When assembled, the or each fluid duct 70 in the cargo floor 20 is defined by two adjacent rails 30 together with the corresponding first, upper, panel 50 and second, lower, panel 60. These are fluidly sealed with each other to define a fluid-tight passageway.

Referring to FIG. 4, each fluid duct 70 in the cargo floor 20 has an inlet 71 and an outlet 72. The inlet 71 and outlet 72 are spaced from each other. The inlet 71 is disposed at one end of the fluid duct 70, and the outlet is disposed at the other end of the fluid duct 70. The inlet 71 comprises an inlet opening to the fluid duct 70. An inlet fluid conduit 73 extends from the opening. The inlet opening may be formed in one of the rails 30, in the first, upper, panel 50, in the second, lower, panel 60 or at an open end 74 of the fluid duct 70. The open end 74 comprises a fluid-tight barrier.

The outlet 72 comprises an inlet opening to the fluid duct 70. An outlet fluid conduit 75 extends from the opening. The outlet opening may be formed in one of the rails 30, in the first, upper, panel 50, in the second, lower, panel 60 or at the other open end 76 of the fluid duct 70. The open end 76 comprises a fluid-tight barrier.

With the above described arrangement, a fluid may be fed into and from the fluid duct 70. Therefore, the fluid duct 70 is able to be fluidly connected to a fluid system (not shown) of the aircraft 10.

The fluid duct 70 as described above provides a linear path along the fuselage 11 of the aircraft 12. By providing the fluid duct 70 between adjacent rails 30, it is possible for the fluid duct 70 to extend along a path over a plurality of bilge crossbeams 40. That is, the second, lower, panel 60 extends over a plurality of bilge crossbeams 40.

Referring to FIG. 3, an alternative embodiment is shown. The arrangement of this embodiment is generally the same as the embodiments described above and so a detailed description will be omitted herein.

According to the invention, and as illustrated in FIG. 3, an inlet 80 to the fluid duct 70 comprises an array of apertures 81 disposed along the length of the fluid duct 70. Each aperture 81 is formed through one of the rails 30. Each aperture 81 extends through one of the walls 34 of the body 32 of the rail 30 to form a fluid path from the channel 35 defined in each rail 30 and the fluid duct 70.

When cargo is brought into the cargo area 12, fluid such as rainwater may also be brought into the cargo area. Such fluid may flow onto the cargo floor 20. With this arrangement, fluid is able to flow from the cargo floor 20 into the fluid duct 70. Fluid flows from the first, upper, plate 50 into the mouth 36 of one of the rails 30. The fluid then passes from the channel 35 to the fluid duct 70 via the apertures 71. This fluid may then pass along the fluid duct 70 and drained away from the cargo area 12. However, such fluid is prevented from flowing into the bilge space 13 in which electrical components, for example, may be received by the second, lower, plate 60 being sealably mounted to the adjacent rails 30. Therefore, fluid in the cargo area 12 is able to be collected and drained away via the outlet 72 (refer to FIG. 4).

When the aircraft is flying, the air in the cargo area 12 must be conditioned by an air conditioning system. The conditioned air may be provided through one of the fluid duct 70, and may be distributed in the cargo area through the aperture 81. In the same way, the air of the cargo area can be aspired in another of the fluid duct 70, through the associated aperture 81.

With the cargo floor 20 having one or more integrated fluid ducts 70 described herein it is possible to easily segregate the fluid ducts from other systems. Furthermore, such fluid ducts 70 do not require any mounting brackets and so the number of components is minimised.

The fluid ducts of the invention may be used for the passage of all type of fluids, for example liquids or gas.

Although in the present embodiment the fluid ducts are made in the cargo floor of the cargo area, it will be understood that such fluid ducts may be made identically in each of the cargo walls which delimit the cargo area. These cargo walls comprise for example lateral, generally vertical, cargo walls, and cargo ceiling. All these cargo walls may comprise at least two rails spaced from each other, a first panel extending between and fluidly sealed with at least two of the rails, and a second panel extending between and fluidly sealed with at least two of the rails, the first and second panels being spaced from each other to define a fluid duct therebetween.

The word "rail", in the present specification, does not designate specifically a guide rail or a sliding rail. On the contrary, it extends to every type of structural member, like a bar or a beam, able to support panels for making a wall, and to define a fluid duct with these panels and another rail.

Although the invention has been described above with reference to one or more preferred embodiments, it will be appreciated that various changes or modifications may be made without departing from the scope of the invention as defined in the appended claims.

## Claims

1. A cargo floor (20) for an aircraft, the cargo floor comprising:
at least two adjacent rails (30) spaced from each other,
a first panel (50) extending between the adjacent rails, the first panel defining the floor of the cargo floor,
a second panel (60) extending between the adjacent rails (30),
the first and second panels being spaced from each other to define a fluid duct (70) therebetween
**characterized in that**
each rail (30) comprising a hollow body (32) having walls that define a channel (35), an upper end and a lower end, an upper flange (39a) extending from the upper end and a lower flange (38a) extending from a lower end, the first panel (50) being supported by the upper flanges of the rails and fluidly sealed with the upper flanges and the second panel (60) being supported by the lower flanges and fluidly sealed with the lower flanges,
the body having a mouth (36) extending along the length of the rail, the mouth being open at the upper end of the rail,
wherein the fluid duct (70) comprises an array of apertures (81) disposed along the length of the fluid duct, each aperture (81) extending through one of the walls of the body of the rail to define a fluid path from the channel (35) defined in each rail and the fluid duct (70).

2. The cargo floor according to claim 1, wherein the fluid duct (70) comprises an outlet (72) formed at one end of the fluid duct (70).

3. The cargo floor according to any one of the preceding claims, wherein at least one of the at least two rails (30 comprises a roller track (37).

## Patentansprüche

1. Frachtdeck (20) für ein Flugzeug, wobei das Frachtdeck Folgendes umfasst:
mindestens zwei benachbarte Schienen (30), die voneinander beabstandet sind,
eine erste Platte (50), die sich zwischen den benachbarten Schienen erstreckt, wobei die erste Platte das Deck des Frachtdecks definiert,
eine zweite Platte (60), die sich zwischen den benachbarten Schienen (30) erstreckt,
wobei die erste und die zweite Platte zur Definition eines Fluiddurchgangs (70) dazwischen voneinander beabstandet sind,
**dadurch gekennzeichnet, dass**
jede Schiene (30) einen Hohlkörper (32) mit einen Kanal (35) definierenden Wänden, einem oberen und einem unteren Ende, einen sich von dem oberen Ende erstreckenden oberen Flansch (39a) und einen sich von dem unteren Ende erstreckenden unteren Flansch (38a) umfasst, wobei die erste Platte (50) durch die oberen Flansche der Schienen gestützt wird und mit den oberen Flanschen fluidisch abgedichtet ist und die zweite Platte (60) durch die unteren Flansche gestützt wird und mit den unteren Flanschen fluidisch abgedichtet ist,
wobei der Körper eine Mündung (36) aufweist, die entlang der Länge der Schiene verläuft, wobei die Mündung am oberen Ende der Schiene offen ist,
wobei der Fluiddurchgang (70) eine Anordnung von Öffnungen (81) umfasst, die entlang der Länge des Fluiddurchgangs angeordnet sind, wobei jede Öffnung (81) durch eine der Wände des Körpers der Schiene verläuft, um einen Fluidweg von dem in jeder Schiene definierten Kanal (35) und dem Fluiddurchgang (70) zu definieren.

2. Frachtdeck nach Anspruch 1, wobei der Fluiddurchgang (70) einen Auslass (72) umfasst, der an einem Ende des Fluiddurchgangs (70) ausgebildet ist.

3. Frachtdeck nach einem der vorhergehenden Ansprüche, wobei mindestens eine der mindestens zwei Schienen (30) eine Rollenbahn (37) umfasst.

## Revendications

1. Plancher de soute (20) pour un aéronef, le plancher de soute comprenant :
au moins deux rails adjacents (30) espacés l'un de l'autre,
un premier panneau (50) s'étendant entre les rails adjacents, le premier panneau définissant le plancher de la soute,
un deuxième panneau (60) s'étendant entre les rails adjacents (30),
le premier et le deuxième panneau étant espacés l'un de l'autre de manière à définir un conduit de fluide (70) entre eux,
**caractérisé en ce que**
chaque rail (30) comprend un corps creux (32) ayant des parois qui définissent un canal (35), une extrémité supérieure et une extrémité inférieure, une bride supérieure (39a) s'étendant depuis l'extrémité supérieure et une bride inférieure (38a) s'étendant depuis une extrémité inférieure, le premier panneau (50) étant supporté par les brides supérieures des rails et étant scellé fluidiquement avec les brides supérieures, et le deuxième panneau (60) étant supporté par les brides inférieures et étant scellé fluidiquement avec les brides inférieures,
le corps ayant une embouchure (36) s'étendant le long de la longueur du rail, l'embouchure étant ouverte au niveau de l'extrémité supérieure du rail, le conduit de fluide (70) comprenant un ensemble d'ouvertures (81) disposées le long de la longueur du conduit de fluide, chaque ouverture (81) s'étendant à travers l'une des parois du corps du rail pour définir un chemin fluidique depuis le canal (35), défini dans chaque rail et dans le conduit de fluide (70).

2. Plancher de soute selon la revendication 1, dans lequel le conduit de fluide (70) comprend une sortie (72) formée à une extrémité du conduit de fluide (70) .

3. Plancher de soute selon l'une quelconque des revendications précédentes, dans lequel au moins l'un des au moins deux rails (30) comprend un chemin de roulement (37).
